# EUROPÄISCHE PATENTSCHRIFT

(11) **EP 0 708 883 B1**
(45) Veröffentlichungstag und Bekanntmachung des Hinweises auf die Patenterteilung: **20.01.1999**
(21) Anmeldenummer: 95914280.3
(22) Anmeldetag: 30.03.1995
(51) Int. Cl.: F02D 41/04, G01D 3/02

(54) **EINRICHTUNG ZUR ERFASSUNG EINER PULSIERENDEN GRÖSSE**
DEVICE FOR DETECTING A PULSATING QUANTITY
DISPOSITIF POUR LA DETECTION D'UN VOLUME PULSE

(30) Priorität: 15.04.1994 DE 4413078
(43) Veröffentlichungstag der Anmeldung: 01.05.1996
(73) Patentinhaber: ROBERT BOSCH GMBH, 70442 Stuttgart (DE)
(72) Erfinder: KONZELMANN, Uwe, D-71679 Asperg (DE)
(86) Internationale Anmeldenummer: DE9500436
(87) Internationale Veröffentlichungsnummer: WO9528560

(56) Entgegenhaltungen:
- PATENT ABSTRACTS OF JAPAN vol. 5 no. 135 (M-085) ,27.August 1981 & JP,A,56 069459 (HITACHI LTD) 10.Juni 1981,
- PATENT ABSTRACTS OF JAPAN vol. 17 no. 604 (M-1506) ,8.November 1993 & JP,A,05 180064 (HONDA MOTOR CO LTD) 20.Juli 1993,
- PATENT ABSTRACTS OF JAPAN vol. 12 no. 495 (M-780) ,23.Dezember 1988 & JP,A,63 212768 (MITSUBISHI MOTORS CORP) 5.September 1988,
- PATENT ABSTRACTS OF JAPAN vol. 13 no. 573 (M-909) ,19.Dezember 1989 & JP,A,01 240755 (MITSUBISHI ELECTRIC CORP) 26.September 1989,
- PATENT ABSTRACTS OF JAPAN vol. 18 no. 76 (M-1556) ,8.Februar 1994 & JP,A,05 288114 (NIPPONDENSO CO LTD) 2.November 1993,

## Beschreibung

### Stand der Technik

Die Erfindung geht aus von einer Einrichtung zur Erfassung einer pulsierenden Größe, insbesondere der einer Brennkraftmaschine zugeführten Luftmasse, nach der Gattung des Hauptanspruchs.

Es ist bekannt, daß bei einer Brennkraftmaschine üblicherweise zu erfassende Betriebsparameter, beispielweise der Saugrohrdruck oder die Ansaugluftmasse im Arbeitstakt der Brennkraftmaschine schwanken. Zusätzlich tritt bei der Messung der Ansaugluftmasse mittels eines Luftmassenmessers ein Rauschen auf, das mehrere Ursachen hat. Zum einen ist in der Luftströmung ein Rauschen, das durch turbulente Schwankungsbewegungen verursacht wird, vorhanden. Dieses Rauschen könnte beispielsweise durch zeitliche und/oder räumliche Mittelung unterdrückt werden. Eine solche Mittelung würde jedoch die dynamischen Vorgänge, die insbesondere durch einen Luftmassensprung beim Beschleunigen sowie durch Saugrohrpulsationen unter bestimmten Betriebsbedingungen auftreten, nicht berücksichtigen.

Eine zweite Rauschquelle, die das Ausgangssignal beeinträchtigt, ist das Rauschen der Elektronik, das durch elektromagnetische Störungen verursacht wird. Auch dieses Rauschen muß mit geeigneten Mitteln verringert werden, damit eine zuverlässige Signalauswertung möglich ist.

Zur Verringerung des Einflusses von Rauschen und sonstigen Störungen bei der Auswertung eines Signales eines Luftmassenmessers wird in der EP-0 429 819 B1 vorgeschlagen, daß das im Takt einer Brennkraftmaschine periodisch schwankende Ausgangssignal eines Saugrohrdrucksensors oder eines Luftmassenmessers vor der Weiterverarbeitung gefiltert wird. Dabei wird zur Filterung der periodisch schwankenden Größe eine Bandsperre verwendet, die so dimensioniert wird, daß an ihrem Ausgang ein Signal entsteht, das den Mittelwert der periodisch schwankenden Größe dynamisch möglichst gut wieder gibt. Es wird dazu mit einer anpaßbaren Mittenfrequenz der Bandsperre gearbeitet, dabei wird die Mittenfrequenz der Bandsperre beispielsweise in Abhängigkeit von zuvor ermittelten Drehzahlwerten verändert. Insgesamt wird vorgeschlagen, daß die Mittenfrequenz so eingestellt wird, daß eine ausreichende Dämpfung der periodischen Schwankung des Signales erzielt wird, so daß direkt ein dem Mittelwert entsprechendes Ausgangssignal am Ausgang des Bandpasses ansteht.

Die bekannte Signalfilterung hat den Nachteil, daß bei der Mittelung eines stark schwankenden Signales dennoch ein Mittelwertsfehler auftritt. Dies ist insbesondere bei Luftmassenmessern mit gekrümmter Kennlinie, also beispielsweise thermischer Luftmassenmessung nicht zu vernachlässigen. Es dürften also bei thermisch schnellen Luftmassenmessern die periodisch schwankenden Signalanteile nicht ausgefiltert werden.

### Vorteile der Erfindung

Die erfindungsgemäße Einrichtung zur Erfassung einer pulsierenden Größe, bei einer Brennkraftmaschine zugeführten Luftmasse hat demgegenüber den Vorteil, daß auch bei einem stark schwankenden Signal eine zuverlässige Dämpfung der dem Signal überlagerten Störungen erhalten wird, ohne daß wesentliche Fehler durch die Mittelung verursacht werden. Es ist damit auch möglich, Sensoren mit gekrümmter Kennlinie, insbesondere thermische Luftmassenmesser zu verwenden und ihre Ausgangssignale so zu filtern, daß sie den Verlauf der zu messenden Größen störungsfrei wiedergeben.

Erzielt werden diese Vorteile, indem das Ausgangssignal eines Sensors, beispielsweise eines Luftmassenmessers einem Filter zugeführt wird, das zum einen als Bandpaß wirkt mit einer Mittenfrequenz, die in Abhängigkeit von der Drehzahl veränderbar ist und so eingestellt wird, daß die periodischen Schwankungen des Signales möglichst wenig gefiltert werden, während andere Signalanteile, besonders die Rauschanteile gefiltert werden und zusätzlich eine Tiefpaßwirkung des Filters erzielt wird, so daß die Signalanteile mit tiefen Frequenzen ebenfalls nicht bzw. wenig gefiltert werden, wodurch ein schneller Signalsprung nicht ausgefiltert wird.

Besonders vorteilhaft ist, daß die Signalfilterung mit Hilfe weniger Elemente realisiert werden kann, die beispielsweise eine Fouriertransformation, eine Filterfunktion sowie eine inverse Fouriertransformation des Signales durchführen und einfach hintereinander geschaltet werden können. Weitere Vorteile der Erfindung werden mit Hilfe der in den Unteransprüchen beanspruchten Merkmalen erzielt.

### Zeichnung

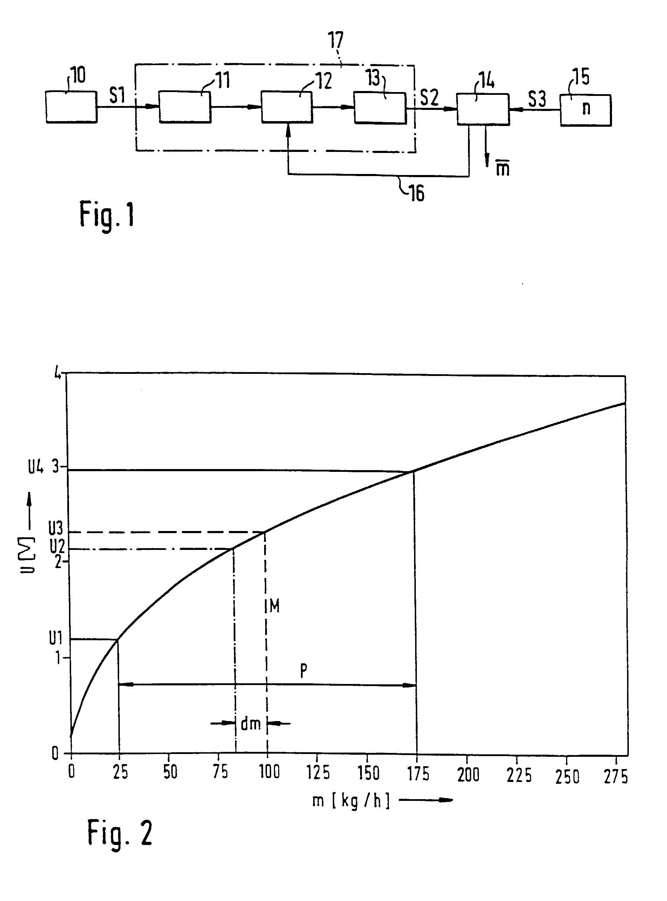

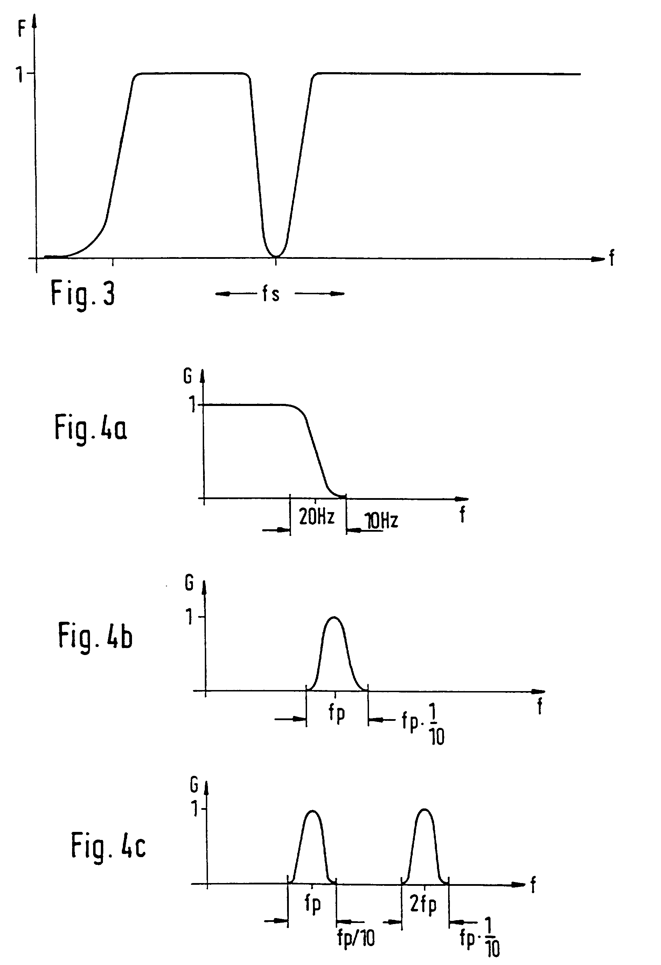

In Figur 1 ist ein Ausführungsbeispiel der Erfindung als Blockschaltbild dargestellt, Figur 2 zeigt eine Kenlinie eines Luftmassenmessers und in Figur 3 ist der zu erzielende Verlauf der Filterwirkung über der Frequenz dargestellt. In den Figuren 4a, b und c sind bekannte Filterfunktionen für einen Tiefpaß sowie zwei verschiedene Bandpässe über der Frequenz aufgetragen.

### Beschreibung des Ausführungsbeispieles

In Figur 1 ist ein Ausführungsbeispiel der Erfindung als Blockschaltbild dargestellt. Dabei ist mit 10 der Sensor bezeichnet, dessen Ausgangssignal ausgewertet werden soll. Bei diesem Sensor handelt es sich beispielsweise um einen Luftmassenmesser, auch ein Saugrohrdrucksensor wäre möglich.

Das Ausgangssignal S1 des Sensors wird einer Stufe 11 zur Fourieranalyse zugeführt, an Stufe 11 schließt sich ein Filter 12, beispielsweise ein Bandpaß mit variabler Mittenfrequenz sowie Tiefpaßcharakteristik an, dem Filter 12 folgt eine Stufe 13 zur Fouriersynthese, an deren Ausgang das Signal S2 entsteht, das die Störungen, die das Signal S1 noch aufweist, nicht mehr enthält und in idealer Weise ein glattes Abbild der zu erfassenden Größe darstellt. Diese Größe ist beispielsweise die von einer Brennkraftmaschine angesaugte Luftmassen, die unter bestimmten Bedingungen pulsiert.

Die Stufen 11, 13 sowie das Filter 12 sind beispielhaft angegeben, sie können auch zu einer einzigen Filtereinrichtung 17 zusammengefaßt sein bzw.. durch eine solche Filtereinrichtung 17 ersetzt werden. Wesentlich ist, daß diese Filtereinrichtung 17 eine Filterwirkung erzielt, wie sie in Figur 3 aufgezeigt wird.

Das störungsfreie Signal S2 wird weiter ausgewertet in einer Recheneinrichtung 14, beispielsweise dem Steuergerät einer Brennkraftmaschine, das aus dem Signalverlauf S2 üblicherweise einen Mittelwert bestimmt.

Der Recheneinrichtung 14 werden weitere Signale S3 zugeführt, beispielsweise die Signale eines Drehzahlsensors 15. In Abhängigkeit von diesen Signalen wird das Filter 12 beispielsweise vom Steuergerät 14 über die Verbindung 16 so beeinflußt, daß die Mittenfrequenz in geeigneter Weise verschoben wird.

Da bei Brennkraftmaschinen die Pulsationsfrequenz der angesaugten Luftmasse sich üblicherweise nach der Gleichung fₚ = n/120 . Z berechnet werden kann, wobei in die Drehzahl pro Minute und Z die Zylinderzahl ist, läßt sich jeweils drehzahlabhängig die zu erwartende Pulsationsfrequenz ermitteln. Da weiterhin Pulsationen üblicherweise bei Drehzahlen zwischen 700 und 3000 Umdrehungen pro Minute auftreten, ergeben sich also Pulsationsfrequenzen für einen Vierzylindermotor von 23 bis 100 Hertz. Innerhalb dieses Frequenzbereiches sollte also die Mittenfrequenz des Bandpasses liegen, wobei sie drehzahlabhängig zu verschieben ist.

In Figur 2 ist die Kennlinie eines Luftmassenmessers, der mit der erfindungsgemäßen Einrichtung nach Figur 1 ausgewertet werden soll, angegeben. Dabei ist die Spannung U in Volt über der Masse m in Kilogramm pro Stunde aufgetragen. Es ist zu erkennen, daß die Kennlinie stark nichtlinear ist. Der Pulsationsbereich P liegt zwischen 25 und 175 Kilogramm pro Stunde bei einer Spannung von 1,2 Volt bis etwa 3 Volt als Massenmittelwert M ist ein Wert von 100 kg pro Stunde eingetragen, der Anzeigefehler bei der Luftmassenmittlung ist mit dm bezeichnet, die zugehörigen Spannungen sind jeweils mit U1 bis U4 bezeichnet.

In Figur 3 ist der Verlauf der Filterwirkung über der Frequenz dargestellt. Dabei ist zu erkennen, daß das Filter 12 so eingestellt wird, daß bei tiefen Frequenzen keine bzw. eine sehr geringe Filterwirkung auftritt, so daß beispielsweise ein Luftmassensprung nicht herausgefiltert wird.

In einem sich anschließenden Frequenzbereich soll die Filterwirkung gleich eins sein, also eine möglichst vollständige Filterung stattfinden. Im Bereich der Frequenz fs die der der drehzahlabhängigen Saugrohrfrequenz entspricht, wird die Filterwirkung möglichst gering gemacht, im sich anschließenden Bereich soll die Filterwirkung wieder nahezu gleich eins sein.

Die Frequenz fs die der Mittenfrequenz des Bandpasses entspricht, wird vom Steuergerät in Abhängigkeit von der Drehzahl verschoben, wobei die Anpassung wie bereits erwähnt so erfolgt, daß die Pulsationen mit der Saugrohrfrequenz möglichst wenig bzw. nicht gedämpft werden.

In Figur 4a bis c ist die Güte G für verschiedene Filter über der Frequenz dargestellt. Diese Zusammenhänge sind bekannt und sollen lediglich zur Verdeutlichung dienen.

Figur 4a bezeichnet dabei einen Tiefpaß, Figur 4b einen Bandpaß mit einer Mittenfrequenz und Figur 4 einen Bandpaß mit zwei Mittenfrequenzen, die fₚ sowie 2fₚ betragen. Die Wirkung dieser Filter soll sich jeweils über einen Bereich von 1 fₚ 1/10 erstrecken.

Beim Tiefpaß ist der Verlauf von G(f) im Bereich von 20± 10 Hz eine verschobene Sinus-Funktion im Bereich von fₚ. Durch Kombination von Filtern mit Güte-Verläufen wie in Figur 4a bis c dargestellt, kann eine erfindungsgemäße Filtereinrichtung aufgebaut werden.

## Patentansprüche

1. Einrichtung zur Erfassung einer pulsierenden Größe, bei einer Brennkraftmaschine, insbesondere der zugeführten Luftmasse, mit einem Sensor, dessen Ausgangssignal einer Filtereinrichtung, die eine Bandpaßcharakteristik mit drehzahlabhängig veränderbaren Mittenfrequenz aufweist, zugeführt wird, dadurch gekennzeichnet, daß die Mittenfrequenz so einstellbar ist, daß die Pulsationen nur wenig gedämpft werden und die Filtereinrichtung zusätzlich Mittel zur Realisierung einer Tiefpaßcharakteristik aufweist.

2. Einrichtung nach Anspruch 1, dadurch gekennzeichnet, daß eine Recheneinrichtung vorhanden ist, der das gefilterte Signal zugeführt wird, daß der Recheneinrichtung weitere Signale, insbesondere die Drehzahl der Brennkraftmaschine zugeführt werden und die Recheneinrichtung die Mittenfrequenz des Bandpasses in Abhängigkeit von der Drehzahl verändert.

3. Einrichtung nach Anspruch 2, dadurch gekennzeichnet, daß die Recheneinrichtung das Steuergerät einer Brennkraftmaschine ist.

4. Einrichtung nach einem der vorhergehenden Ansprüche, dadurch gekennzeichnet, daß die Mittenfrequenz des Bandpasses so verändert wird, daß die zu erwartenden Pulsationen nicht oder nur wenig gedämpft werden und die Signalanteile in einem Bereich, der oberhalb der Mittenfrequenz liegt sowie in einem Bereich, der zwischen der Mittenfrequenz und einer vorgebbaren tiefen Frequenz liegt, möglichst vollständig gedämpft werden.

5. Einrichtung nach einem der vorhergehenden Ansprüche, dadurch gekennzeichnet, daß Mittel zur Signalbeeinflussung vorgesehen sind, die wenigstens eine Stufe zur Fourieranalyse, eine Stufe mit einer Filterfunktion und eine Stufe zur Fouriersynthese umfassen, die einander zugeordnet sind.

## Claims

1. Device for the detection of a pulsating variable, in the case of an internal combustion engine, in particular the supplied air mass flow, having a sensor whose output signal is supplied to a filter device which has a bandpass characteristic with a centre frequency which can be varied as a function of the rotation speed, characterized in that the centre frequency can be set such that the pulsations are only slightly attenuated, and the filter device additionally has means for implementation of a low-pass characteristic.

2. Device according to Claim 1, characterized in that a computation device is provided, to which the filtered signal is supplied, in that further signals, in particular the rotation speed of the internal combustion engine, are supplied to the computation device, and said computation device varies the centre frequency of the bandpass filter as a function of the rotation speed.

3. Device according to Claim 2, characterized in that the computation device is the controller of an internal combustion engine.

4. Device according to one of the preceding claims, characterized in that the centre frequency of the bandpass filter is varied such that the pulsations to be expected are not attenuated or are attenuated only slightly, and the signal elements are attenuated as completely as possible in a region which is above the centre frequency and in a region which is between the centre frequency and a low frequency which can be predetermined.

5. Device according to one of the preceding claims, characterized in that means are provided to influence the signal, which means comprise at least one stage for Fourier analysis, one stage having a filter function and one stage for Fourier synthesis, which are associated with one another.

## Revendications

1. Installation pour saisir une grandeur pulsée dans un moteur à combustion interne notamment de la masse d'air d'alimentation comprenant un capteur dont le signal de sortie est appliqué à une installation de filtre ayant une caractéristique de bande passante dont la fréquence centrale varie en fonction de la vitesse de rotation,
caractérisée en ce que
la fréquence centrale est réglable pour que les pulsations ne soient que faiblement atténuées et que l'installation de filtre comporte en outre des moyens pour donner une caractéristique de filtre passe-bas.

2. Installation selon la revendication 1,
caractérisée par
une installation de calcul qui reçoit le signal filtré et cette installation de calcul reçoit d'autres signaux notamment la vitesse de rotation du moteur à combustion interne et cette installation de calcul modifie la fréquence centrale du filtre passe-bande en fonction de la vitesse de rotation.

3. Installation selon la revendication 2,
caractérisée en ce que
l'installation de calcul est l'appareil de commande d'un moteur à combustion interne.

4. Installation selon l'une quelconque des revendications précédentes,
caractérisée en ce que la fréquence centrale du filtre passe-bande est modifiée pour que les pulsations prévisibles ne soient pas atténuées ou ne le soient que faiblement et que les composantes de signal situées dans une plage au-dessus de la fréquence centrale et dans une plage comprise entre la fréquence centrale et une fréquence basse, prédéterminée, soient autant que possible totalement atténuées.

5. Installation selon l'une quelconque des revendications précédentes,
caractérisée en ce qu'
elle comporte des moyens pour influencer le signal ayant au moins un étage pour une analyse de Fourier, un étage avec une fonction de filtre et un étage pour la synthèse de Fourier, ces étages se suivant les uns les autres.
